# EUROPEAN PATENT SPECIFICATION

(11) **EP 3 206 251 B1**
(45) Date of publication and mention of the grant of the patent: **10.07.2019**
(21) Application number: 16740346.8
(22) Date of filing: 13.01.2016
(51) Int. Cl.: H01M 12/08, H01M 2/16, H01M 4/62

(54) **LITHIUM-AIR BATTERY**
LITHIUM-LUFT-BATTERIE
BATTERIE LITHIUM-AIR

(30) Priority: 21.01.2015 KR 20150010018
(43) Date of publication of application: 16.08.2017
(73) Proprietor: LG Chem, Ltd., Seoul 07336 (KR)
(72) Inventor: CHO, Eun Kyung, Daejeon 34122 (KR); CHAE, Jong Hyun, Daejeon 34122 (KR); YANG, Doo Kyung, Daejeon 34122 (KR); KIM, Yu Mi, Daejeon 34122 (KR); PARK, Gi Su, Daejeon 34122 (KR); LEE, Dong Wook, Daejeon 34122 (KR)
(74) Representative: Hoffmann Eitle
(86) International application number: PCT/KR2016/000317
(87) International publication number: WO 2016/117873

(56) References cited:
- JP-A- 2006 324 104
- JP-A- 2010 287 390
- KR-A- 20130 001 170
- KR-A- 20130 001 170
- KR-A- 20140 025 403
- KR-A- 20150 004 358
- US-A1- 2008 268 327
- US-A1- 2013 171 527

## Description

### [Technical Field]

The present invention relates to a lithium-air battery, more specifically relates to a lithium-air battery of which discharge capacity is increased by increasing the amount of conductive material.

### [Background Art]

Lithium-air batteries have the weight energy density of about 500 Wh/kg or more which is much higher than that of current lithium-ion batteries (200 Wh/kg) or the next generation lithium-ion batteries (300 Wh/kg), and thus many researches thereon have been made as a battery for electric vehicles capable of a long driving distance on a single charge.

The lithium-air batteries have a high energy density, but on the other hand show such problems of a high over-voltage during charging and a short cycle life. In order to solve these problems, Korean Patent Laid-open Publication No. 10-2013-0001170 discloses a technique of using a positive electrode consisting of a carbon cloth, a carbon paper, or a carbon felt, each of which is coated by a conductive material or a selective oxygen-permeable membrane. However, such a method has limitation in the amount of coating with the conductive material since layers of conductive material may be split when the amount of conductive material is increased.

To reach the high energy density which is an advantage of the lithium-air battery, the areal capacity must be increased. However, it is difficult to increase the discharge capacity enough only by the currently applied restricted coating amount of the conductive material. Also, the restricted coating amount can hardly contribute greatly to the resolution of the over-voltage problem and the improvement of cycle life.

### [Prior Art]

### [Patent Document]

Korean Patent Laid-open Publication No. 10-2013-0001170

US 2013/171527 A1 discloses metal-air battery devices that are rechargeable, thin film and all solid-state.

US 2008/268327 A1 also describes a metal-air battery including a cathode to reduce oxygen molecules and an alkali-metal-containing anode to oxidize the alkali metal to produce alkali-metal ions. An ion-selective membrane is interposed between the alkali-metal containing anode and the aqueous catholyte.

### [Disclosure]

### [Technical Problem]

The present invention has been designed for solving the above-stated problems of prior arts, and has the purpose of providing a lithium-air battery capable of providing improvements in discharge capacity and cycle life by using a sufficient amount of conductive material.

### [Technical Solution]

An embodiment of the present invention is defined in claim 1 and provides a lithium-air battery comprising: an air electrode using oxygen as a positive electrode active material; a negative electrode disposed apart from the positive electrode; a separator interposed between the positive electrode and the negative electrode; and an electrolyte.

Here, the air electrode includes a gas diffusion layer and a coating layer of a first conductive material for coating the surface of the gas diffusion layer, and the separator includes a coating layer of a second conductive material for coating the surface of the separator.

The gas diffusion layer of the air electrode may include any one selected from the group consisting of carbon cloth, carbon paper, carbon felt, selective oxygen-permeable membrane, and combinations thereof.

The gas diffusion layer of the air electrode may further include a porous current collector.

The negative electrode may be any one selected from the group consisting of lithium metal, lithium metal composite treated with organic or inorganic compound, lithiated metal-carbon composite, and mixtures thereof.

The separator may be any one selected from the group consisting of polyethylene membrane, polypropylene membrane, glass fiber membrane, and combinations thereof.

The electrolyte may be any one selected from the group consisting of aqueous electrolyte, non-aqueous electrolyte, organic solid electrolyte, inorganic solid electrolyte, and mixtures thereof.

The first conductive material and the second conductive material are each independently any one selected from the group consisting of carbon black, Ketjen black, Super P, Denka black, acetylene black, activated carbon powder, carbon molecular sieve, carbon nanotube, carbon nanowire, activated carbon having a micropore, mesoporous carbon, graphite, copper powder, silver powder, nickel, aluminum powder, polyphenylene derivative, and mixtures thereof.

The air electrode may further include any one of catalyst selected from the group consisting of Pt, Pd, Ru, Rh, Ir, Ag, Au, Ti, V, Cr, Mn, Fe, Ni, Co, Cu, Mo, W, Zr, Zn, Ce, La metal, oxides of the metals, and mixtures thereof.

The second conductive material coating layer in the separator and the first conductive material coating layer in the air electrode are arranged to face each other.

The second conductive material coating layer in the separator and the first conductive material coating layer in the air electrode are in direct contact with each other.

The second conductive material in the separator and the first conductive material in the air electrode may be different from each other.

### [Advantageous Effects]

The lithium-air battery of the present invention uses a sufficient amount of conductive material by coating the conductive material on the surface of positive electrode and on the surface of separator, thereby providing improvements in the discharge capacity and the cycle life.

### [Description of Drawings]

Figure 1 is a view schematically showing an embodiment of the lithium-air battery of the present invention.
Figure 2 is a graph showing the result of measuring the discharge capacity of the coin cells prepared in Example 1, and Comparative Examples 1 and 2 in Experiment 1.

### [Best Mode]

Hereinafter, the present invention will be explained in detail by referring to the accompanying drawings for the examples of the present invention so that a person of ordinary skill in the art may easily practice the invention. However, the present invention may be realized in many different forms and should not be construed as limited to the embodiments set forth herein.

The term "air" as used herein is not limited to the atmospheric air, but may include a combination of gases including oxygen, or pure oxygen gas. The broad definition for the term "air" can be applied to all kinds of applications, such as air cell, air electrode, etc.

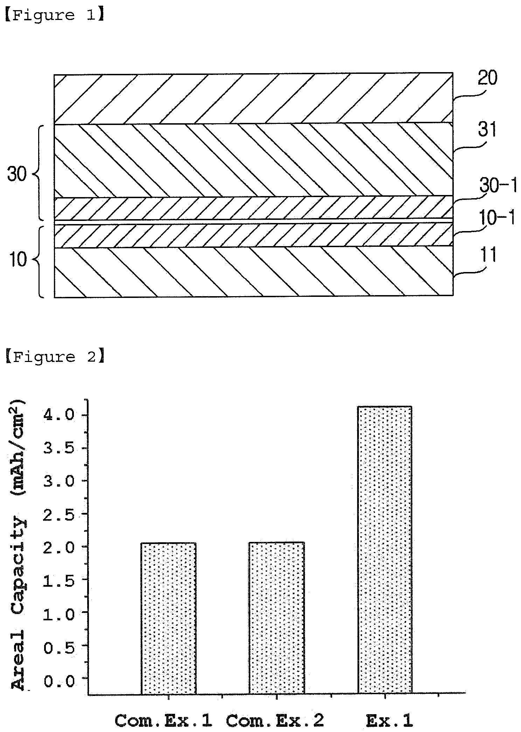

The lithium-air battery according to one embodiment of the present invention, as depicted in Figure 1, includes an air electrode (10) using oxygen as a positive electrode active material; a negative electrode (20) disposed apart from the positive electrode; a separator (30) which is interposed between the positive electrode and the negative electrode and coated with a conductive material; and an electrolyte (not shown).

Here, the air electrode (10) includes a gas diffusion layer (11) and a first conductive material coating layer (10-1) for coating the surface of the gas diffusion layer (11) with the first conductive material, and the separator (30) coated with a conductive material includes a separator membrane (31) and a second conductive material coating layer (30-1) for coating the surface of the separator membrane (31) with the second conductive material.

Except that the lithium-air battery includes the first conductive material coating layer (10-1) and the second conductive material coating layer (30-1), for the other elements of the lithium-air battery, those known in this area may be utilized.

The gas diffusion layer (11) of the air electrode (10) is not particularly limited, and may include any one selected from the group consisting of carbon cloth, carbon paper, carbon felt, selective oxygen-permeable membrane, and combinations thereof.

The air electrode (10) may be prepared by a method of attaching the gas diffusion layer (11) such as carbon cloth, carbon paper, carbon felt, selective oxygen-permeable membrane, etc. to a surface of porous current collector. However, the present invention is not limited to this way.

Also, the air electrode (10) may optionally further include a current collector (not shown). In this case, the gas diffusion layer (11) may be formed as follows: For example, a method of dispersing a carbon material or a carbon material and a catalyst in a solvent and pushing it into a porous three-dimensional current collector such as a nickel foam, a method of binding an active material to a porous current collector using sonication, a method of preparing an active material in a sheet form and attaching it to the surface of a porous current collector, etc.

The porous current collector may be any one selected from the group consisting of nickel foam having a three dimensional structure, nickel mesh having a planar structure, aluminum mesh, carbon paper, carbon foam, aluminum foam, and combinations thereof.

In addition, the air electrode (10) may optionally further include a catalyst for the oxidation/reduction of oxygen, which may be any one selected from the group consisting of Pt, Pd, Ru, Rh, Ir, Ag, Au, Ti, V, Cr, Mn, Fe, Ni, Co, Cu, Mo, W, Zr, Zn, Ce, La metal, oxides of the metals, and mixtures thereof.

The catalyst may also be supported on a carrier. The carrier may be any one selected from the group consisting of oxide, zeolite, clay mineral, carbon, and mixtures thereof. The oxide may be oxides including alumina, silica, zirconium oxide, titanium dioxide, etc., or an oxide containing any one of metal selected from the group consisting of Ce, Pr, Sm, Eu, Tb, Tm, Yb, Sb, Bi, V, Cr, Mn, Fe, Co, Ni, Cu, Nb, Mo, W, and mixtures thereof. The carbon may be carbon blacks such as Ketjen black, acetylene black, lamp black, etc., graphites such as natural graphite, artificial graphite, expanded graphite, etc., activated carbons, carbon fibers, etc., but not necessarily limited thereto. Any one that may be used as a carrier in the art can be used.

The negative electrode (20) may be made of a material capable of occluding and releasing lithium, specifically, any one selected from the group consisting of lithium metal, lithium metal composite treated with organic or inorganic compound, lithiated metal-carbon composite, and mixtures thereof.

The negative electrode (20) may optionally further include a current collector (not shown), and any one known in the art may be used without limit as the current collector. For example, a metal plate such as stainless steel, nickel, aluminum, etc., carbon paper, etc. may be used. The current collector may be coated with an oxidation-resistant metal or an alloy film in order to prevent oxidation.

The separator membrane (31) is not particularly limited, but may include any one selected from the group consisting of polyethylene membrane, polypropylene membrane, glass fiber membrane, and combinations thereof.

The electrolyte is not particularly limited, but any one of electrolyte selected from the group consisting of aqueous electrolyte, non-aqueous electrolyte, organic solid electrolyte, inorganic solid electrolyte, and mixtures thereof may be used.

The non-aqueous electrolyte may include an aprotic solvent. As the aprotic solvent, for example, a carbonate-based, an ester-based, an ether-based, a ketone-based, an amine-based, or a phosphine-based solvent may be used.

The ether-based solvent includes acyclic ethers or cyclic ethers.

Non-limiting examples of the acyclic ethers may include one or more compounds selected from the group consisting of 1,2-dimethoxyethane, 1,2-diethoxyethane, 1,2-dibutoxyethane, diethylene glycol dimethyl ether, diethylene glycol diethyl ether, triethylene glycol dimethyl ether, triethylene glycol diethyl ether, tetraethylene glycol dimethyl ether, tetraethylene glycol diethyl ether, dimethyl sulfoxide and N,N-dimethyl acetamide.

In addition, non-limiting examples of the cyclic ethers may include one or more compounds selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyl tetrahydrofuran, 2,5-dimethyl tetrahydrofuran, 2,5-dimethoxy tetrahydrofuran, 2-ethoxy tetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether.

As the organic solid electrolyte, for example, polyethylene derivatives, polyethylene oxide derivatives, polypropylene oxide derivatives, phosphoric acid ester polymers, poly agitation lysine, polyester sulfide, polyvinyl alcohol, polyvinylidene fluoride, an agent for polymerization containing an ionic dissociation group, etc. may be used.

As the inorganic solid electrolyte, for example, nitrides, halides, sulfates, etc. of Li such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, etc. may be used.

The electrolyte may include a lithium salt dispersed on the electrolyte.

Any lithium salt that is typically applicable to the lithium-air battery may be used without particular limit. Preferably, the lithium salt may be any one of compound selected from the group consisting of LiSCN, LiBr, LiI, LiPF₆, LiBF₄,
LiSbF₆, LiAsF₆, LiCH₃SO₃, LiCF₃SO₃, LiClO₄, Li(Ph)₄, LiC(CF₃SO₂)₃, LiN(CF₃SO₂)₂, LiN(C₂F₅SO₂)₂, LiN(SFO₂)₂, and LiN(CF₃CF₂SO₂)₂. In addition, the electrolyte may optionally further include any one of redox mediator selected from the group consisting of LiI, NaI and KI. In case that the electrolyte further includes the redox mediator, the over-voltage during the lithium-air battery charging process may be reduced. The electrolyte may exist immersed in the separator (30) coated with the conductive material, and a part thereof may exist absorbed in the air electrode (10) or in the negative electrode (20), in addition to the separator (30) coated with the conductive material.

The first conductive material for coating the surface of gas diffusion layer (11) and the second conductive material for coating the surface of separator membrane (31) are each independently any one selected from the group consisting of carbon black, Ketjen black, Super P, Denka black, acetylene black, activated carbon powder, carbon molecular sieve, carbon nanotube, carbon nanowire, activated carbon having a micropore, mesoporous carbon, graphite, copper powder, silver powder, nickel, aluminum powder, polyphenylene derivative, and mixtures thereof. The first conductive material included in the first conductive material coating layer (10-1) and the second conductive material included in the second conductive material coating layer (30-1) may be different from each other. It is preferable to use a material capable of improving the reactivity in the air electrode (10) as the first conductive material, and it is preferable to use a material capable of reducing the interfacial resistance between the separator membrane (31) and the air electrode (10) as the second conductive material.

As a method for forming the first conductive material coating layer (10-1) and the second conductive material coating layer (30-1), various methods for preparing a thin film known in the art, such as for example, reduced pressure filtration, dipping, screen printing, vacuum thermal deposition using the thermal evaporation of metal, vacuum electron-beam deposition using an electron-beam, sputtering deposition, or chemical deposition, etc. may be used.

Furthermore, as depicted in Figure 1, the first conductive material coating layer (10-1) and the second conductive material coating layer (30-1) are layered next to each other. In other words, the second conductive material coating layer (30-1) in the separator (30) coated with a conductive material and the first conductive material coating layer (10-1) in the air electrode (10) are arranged to face each other. The second conductive material coating layer (30-1) in the separator (30) coated with a conductive material and the first conductive material coating layer (10-1) in the air electrode (10) are in direct contact with each other. When the second conductive material coating layer (30-1) and the first conductive material coating layer (10-1) are in contact with each other and are arranged to face each other, the discharge capacity and the cycle life of the lithium-air battery may be improved due to the use of sufficient amount and thickness of the conductive material.

### [Mode for Invention]

Hereinafter, preferable examples and comparative examples are provided for better understanding of the present invention. However, these examples are only intended to illustrate the present invention, and the invention is not restricted to them.

### [Preparation of Lithium-air battery]

### (Example 1: Preparation of lithium-air battery)

The conductive material Super P was coated in the amount of 0.412 mg/cm² on a carbon paper to prepare an air electrode, and Super P was also coated in the amount of 0.626 mg/cm² on one side of a PE separator membrane to prepare a separator. Lithium metal in the thickness of 150 *µ*m was prepared as a negative electrode. A lithium salt LiN(CF₃SO₂)₂ of 1.0 M was added to an ether-based solvent tetraethylene glycol dimethyl ether (TEGDME) to prepare an electrolyte solution. The separator was immersed in the electrolyte.

The air electrode, the negative electrode, and the separator immersed in the electrolyte as prepared above were introduced into a battery case in such a manner that the Super P coating layer of the separator and the Super P coating layer of the air electrode faced each other to prepare the lithium-air battery.

### (Comparative Example 1: Preparation of lithium-air battery)

The conductive material Super P was coated in the amount of 0.674 mg/cm² on a carbon paper to prepare an air electrode. A PE separator, and lithium metal in the thickness of 150 *µ*m as a negative electrode were prepared. A lithium salt LiN(CF₃SO₂)₂ of 1.0 M was added to an ether-based solvent tetraethylene glycol dimethyl ether (TEGDME) to prepare an electrolyte solution. The separator was immersed in the electrolyte.

The air electrode, the negative electrode, and the separator immersed in the electrolyte as prepared above were introduced into a battery case in such a manner that [the Super P coating layer of] the separator and the Super P coating layer of the air electrode faced each other to prepare the lithium-air battery.

### (Comparative Example 2: Preparation of lithium-air battery)

A carbon paper was prepared as an air electrode. Super P was coated in the amount of 0.669 mg/cm² on one side of a PE separator membrane to prepare a separator. Lithium metal in the thickness of 150 *µ*m was prepared as a negative electrode, and a lithium salt LiN(CF₃SO₂)₂ of 1.0 M was added to an ether-based solvent tetraethylene glycol dimethyl ether (TEGDME) to prepare an electrolyte solution. The separator was immersed in the electrolyte.

The air electrode, the negative electrode, and the separator immersed in the electrolyte as prepared above were introduced into a battery case in such a manner that the Super P coating layer of the separator and [the Super P coating layer of] the air electrode faced each other to prepare the lithium-air battery.

### [Experiment: Test of performance of lithium-air battery]

In order to measure the discharge capacity of the lithium-air batteries prepared in Example 1 and Comparative Examples 1 and 2, they were introduced into a box capable of electrochemical measurement. The box was adjusted to maintain the oxygen pressure of 1 atm and the constant temperature of 25 °C .

The discharge capacity was measured by an electrochemical method using the wires of positive electrode and negative electrode connected to the outside of the box, wherein the
current was applied to each cell in the amount of 100 mA/g with respect to the amount of coated carbon to measure the discharge capacity.

The experimental results are shown in Figure 2.

As depicted in Figure 2, the batteries of Comparative Examples 1 and 2 wherein either the separator or the air electrode only was coated with the conductive material showed almost similar discharge capacities. On the contrary, the battery of Example 1, which included the conductive material twice as much as that of Comparative Examples 1 and 2 since both of the separator and the air electrode were coated with the conductive material, showed the discharge capacity substantially twice those of Comparative Examples 1 and 2. From this result, it was confirmed that the lithium-air battery of the present invention has a very remarkable areal discharge capacity.

Furthermore, from the batteries of Comparative Examples 1 and 2 wherein a similar amount of conductive material was used as a coating material for the surfaces different from each other, it was confirmed that the areal discharge capacity is not influenced by the state of coating of the conductive material, but influenced by the amount thereof.

The preferred embodiments of the present invention have been described above in detail.

### [Symbols in Drawings]

10: Air electrode
10-1: First conductive material coating layer
20: Negative electrode
30: Separator coated with conductive material
30-1: Second conductive material coating layer
31: Separator membrane

### [Industrial Applicability]

The present invention relates to a lithium-air battery. This lithium-air battery shows excellent discharge capacity and cycle life by using a sufficient amount of conductive material which is coated on the surfaces of positive electrode and separator.

## Claims

1. A lithium-air battery comprising:
an air electrode (10) using oxygen as a positive electrode active material;
a negative electrode (20) disposed apart from the positive electrode;
a separator (30) interposed between the positive electrode and the negative electrode (20); and
an electrolyte,
wherein the air electrode (10) includes a gas diffusion layer (11) and a coating layer of a first conductive material (10-1) for coating the surface of the gas diffusion layer (11), and
the separator (30) includes a coating layer of a second conductive material (30-1) for coating the surface of a separator membrane (31),
wherein the first conductive material and the second conductive material are each independently any one selected from the group consisting of carbon black, Ketjen black, Super P, Denka black, acetylene black, activated carbon powder, carbon molecular sieve, carbon nanotube, carbon nanowire, activated carbon having a micropore, mesoporous carbon, graphite, copper powder, silver powder, nickel, aluminum powder, polyphenylene derivative, and mixtures thereof,
wherein the second conductive material coating layer (30-1) in the separator (30) and the first conductive material coating layer (10-1) in the air electrode (10) are arranged to face each other, and wherein the second conductive material coating layer (30-1) in the separator and the first conductive material coating layer (10-1) in the air electrode (10) are in direct contact with each other.

2. The lithium-air battery according to Claim 1, wherein the gas diffusion layer (11) of the air electrode (10) includes any one selected from the group consisting of carbon cloth, carbon paper, carbon felt, selective oxygen-permeable membrane, and combinations thereof.

3. The lithium-air battery according to Claim 2, wherein the gas diffusion layer (11) of the air electrode (10) further includes a porous current collector.

4. The lithium-air battery according to Claim 1, wherein the negative electrode (20) is any one selected from the group consisting of lithium metal, lithium metal composite treated with organic or inorganic compound, lithiated metal-carbon composite, and mixtures thereof.

5. The lithium-air battery according to Claim 1, wherein the separator membrane (31) is any one selected from the group consisting of polyethylene membrane, polypropylene membrane, glass fiber membrane, and combinations thereof.

6. The lithium-air battery according to Claim 1, wherein the electrolyte is any one selected from the group consisting of aqueous electrolyte, non-aqueous electrolyte, organic solid electrolyte, inorganic solid electrolyte, and mixtures thereof.

7. The lithium-air battery according to Claim 1, wherein the air electrode further includes any one of catalyst selected from the group consisting of Pt, Pd, Ru, Rh, Ir, Ag, Au, Ti, V, Cr, Mn, Fe, Ni, Co, Cu, Mo, W, Zr, Zn, Ce, La metal, oxides of the metals, and mixtures thereof.

8. The lithium-air battery according to Claim 1, wherein the second conductive material in the separator and the first conductive material in the air electrode are different from each other.

## Patentansprüche

1. Lithium-Luft-Batterie, umfassend:
eine Luftelektrode (10), die Sauerstoff als ein Positivelektroden-Aktivmaterial verwendet;
eine Negativelektrode (20), angeordnet getrennt von der Positivelektrode;
einen Separator (30), zwischengeschoben zwischen der Positivelektrode und der Negativelektrode (20); und
einen Elektrolyten,
wobei die Luftelektrode (10) eine Gasdiffusionsschicht (11) und eine Beschichtungsschicht eines ersten leitenden Materials (10-1) zum Beschichten der Oberfläche der Gasdiffusionsschicht (11) enthält, und
der Separator (30) eine Beschichtungsschicht eines zweiten leitenden Materials (30-1) zum Beschichten der Oberfläche einer Separatormembran (31) enthält,
wobei das erste leitende Material und das zweite leitende Material jeweils unabhängig ein beliebiges Material sind, ausgewählt aus der Gruppe, bestehend aus Ruß, Ketjen-Black, Super P, Denka-Black, Acetylen-Black, aktiviertem Kohlenstoffpulver, Kohlenstoffmolekularsieb, Kohlenstoffnanoröhrchen, Kohlenstoffnanodraht, aktiviertem Kohlenstoff mit Mikropore, mesoporösem Kohlenstoff, Graphit, Kupferpulver, Silberpulver, Nickel, Aluminiumpulver, Polyphenylenderivat und Mischungen davon,
wobei die zweite Beschichtungsschicht leitenden Materials (30-1) in dem Separator (30) und die erste Beschichtungsschicht leitenden Materials (10-1) in der Luftelektrode (10) einander zugewandt angeordnet sind und wobei die zweite Beschichtungsschicht leitenden Materials (30-1) in dem Separator und die erste Beschichtungsschicht leitenden Materials (10-1) in der Luftelektrode (10) in direktem Kontakt miteinander stehen.

2. Lithium-Luft-Batterie gemäß Anspruch 1, wobei die Gasdiffusionsschicht (11) der Luftelektrode (10) ein beliebiges Material enthält, ausgewählt aus der Gruppe, bestehend aus Kohlenstoffgewebe, Kohlenstoffpapier, Kohlenstofffilz, selektiver Sauerstoff-permeabler Membran und Kombinationen davon.

3. Lithium-Luft-Batterie gemäß Anspruch 2, wobei die Gasdiffusionsschicht (11) der Luftelektrode (10) weiterhin einen porösen Stromkollektor enthält.

4. Lithium-Luft-Batterie gemäß Anspruch 1, wobei die Negativelektrode (20) eine beliebige ist, ausgewählt aus der Gruppe, bestehend aus Lithiummetall, Lithiummetallverbund behandelt mit organischer oder anorganischer Verbindung, lithiiertem Metall-Kohlenstoff-Verbund und Mischungen davon.

5. Lithium-Luft-Batterie gemäß Anspruch 1, wobei die Separatormembran (31) eine beliebige ist, ausgewählt aus der Gruppe, bestehend aus Polyethylenmembran, Polypropylenmembran, Glasfasermembran und Kombinationen davon.

6. Lithium-Luft-Batterie gemäß Anspruch 1, wobei der Elektrolyt ein beliebiger ist, ausgewählt aus der Gruppe, bestehend aus wässrigem Elektrolyten, nichtwässrigem Elektrolyten, organischem Festelektrolyten, anorganischem Festelektrolyten und Mischungen davon.

7. Lithium-Luft-Batterie gemäß Anspruch 1, wobei die Luftelektrode weiterhin einen beliebigen Katalysator enthält, ausgewählt aus der Gruppe, bestehend aus Pt, Pd, Ru, Rh, Ir, Ag, Au, Ti, V, Cr, Mn, Fe, Ni, Co, Cu, Mo, W, Zr, Zn, Ce, La-Metall, Oxiden der Metalle und Mischungen davon.

8. Lithium-Luft-Batterie gemäß Anspruch 1, wobei das zweite leitende Material in dem Separator und das erste leitende Material in der Luftelektrode voneinander unterschiedlich sind.

## Revendications

1. Batterie lithium-air comprenant:
une électrode à air (10) utilisant de l'oxygène en tant que matériau actif d'électrode positive ;
une électrode négative (20) disposée séparément de l'électrode positive ;
un séparateur (30) interposé entre l'électrode positive et l'électrode négative (20) ; et
un électrolyte,
dans laquelle l'électrode à air (10) comporte une couche de diffusion de gaz (11) et une couche de revêtement d'un premier matériau conducteur (10-1) pour le revêtement de la surface de la couche de diffusion de gaz (11), et
le séparateur (30) comporte une couche de revêtement d'un deuxième matériau conducteur (30-1) pour le revêtement de la surface d'une membrane de séparation (31),
dans laquelle le premier matériau conducteur et le deuxième matériau conducteur sont chacun indépendamment l'un quelconque choisi parmi le groupe constitué du noir de carbone, du noir de Ketjen, du Super P, du noir de Denka, du noir d'acétylène, de la poudre de carbone activé, d'un tamis moléculaire de carbone, d'un nanotube de carbone, d'un nanofil de carbone, du carbone activé ayant une micropore, du carbone mésoporeux, du graphite, de la poudre de cuivre, de la poudre d'argent, du nickel, de la poudre d'aluminium, d'un dérivé de polyphénylène, et de mélanges de ceux-ci,
dans laquelle la couche de revêtement de deuxième matériau conducteur (30-1) dans le séparateur (30) et la couche de revêtement de premier matériau conducteur (10-1) dans l'électrode à air (10) sont arrangées pour se faire face l'une par rapport à l'autre, et dans laquelle la couche de revêtement de deuxième matériau conducteur (30-1) dans le séparateur (30) et la couche de revêtement de premier matériau conducteur (10-1) dans l'électrode à air (10) sont en contact direct l'une avec l'autre.

2. La batterie lithium-air selon la revendication 1, dans laquelle la couche de diffusion de gaz (11) de l'électrode à air (10) comporte l'un quelconque choisi parmi le groupe constitué d'un tissu carbone, du papier carbone, du carbone feutre, d'une membrane perméable à l'oxygène de façon sélective, et de combinaisons de ceux-ci.

3. La batterie lithium-air selon la revendication 2, dans laquelle la couche de diffusion de gaz (11) de l'électrode à air (10) comporte en outre un collecteur de courant poreux.

4. La batterie lithium-air selon la revendication 1, dans laquelle l'électrode négative (20) est l'une quelconque choisie parmi le groupe constitué du lithium métallique, d'un composite de lithium métallique traité avec un composé organique ou inorganique, d'un composite carbone-métal lithié, et de mélanges de ceux-ci.

5. La batterie lithium-air selon la revendication 1, dans laquelle la membrane de séparation (31) est l'une quelconque choisie parmi le groupe constitué d'une membrane polyéthylène, d'une membrane polypropylène, d'une membrane en fibre de verre, et de combinaisons de celles-ci.

6. La batterie lithium-air selon la revendication 1, dans laquelle l'électrolyte est l'un quelconque choisi parmi le groupe constitué d'un électrolyte aqueux, d'un électrolyte non-aqueux, d'un électrolyte solide organique, d'un électrolyte solide inorganique, et de mélanges de ceux-ci.

7. La batterie lithium-air selon la revendication 1, dans laquelle l'électrode à air comporte en outre l'un quelconque d'un catalyseur choisi parmi le groupe constitué de Pt, Pd, Ru, Rh, Ir, Ag, Au, Ti, V, Cr, Mn, Fe, Ni, Co, Cu, Mo, W, Zr, Zn, Ce, La métallique, d'oxides des métaux, et de mélanges de ceux-ci.

8. La batterie lithium-air selon la revendication 1, dans laquelle le deuxième matériau conducteur dans le séparateur et le premier matériau conducteur dans l'électrode à air sont différents l'un de l'autre.
